# EUROPÄISCHE PATENTANMELDUNG

(11) **EP 0 696 147 A1**
(43) Veröffentlichungstag der Anmeldung: **07.02.1996**
(21) Anmeldenummer: 94112147.7
(22) Anmeldetag: 03.08.1994
(51) Int. Cl.: H04Q 3/66

(54) **Verfahren und Routing-System zur dynamischen Verkehrslenkung in einem Kommunikationsnetz**

(71) Anmelder: SIEMENS AKTIENGESELLSCHAFT, D-80333 München (DE)
(72) Erfinder: Stademann, Rainer, Dr. rer. nat., D-85658 Egmating (DE); Gehlhaus, Karl, Ing., D-81377 München (DE)

(57) **Zusammenfassung**

Die dynamische Leitweglenkung eines Kommunikationsnetzes soll sich an die jeweilige im Netz vorliegende Verkehrslast so anpassen, daß der Netzdurchsatz optimiert wird.

Die erfindungsgemäße Leitweglenkung löst diese Problem durch einen Wegefächer zur Aufnahme von Alternativwegen für den Überlaufverkehr, wobei ein bisher im Wegefächer enthaltenerr Alternativweg ersatzlos aus dem Wegefächer entfernt wird, sobald festgestellt wird, daß er nicht mehr verfügbar ist.

## Beschreibung

Die Erfindung betrifft ein Verfahren und ein Routing-System zur dynamischen Verkehrslenkung in einem Kommunikationsnetz
Nichthierarchisch organisierte, leitungsvermittelnde Kommunikationsnetze benötigen eine dynamische Leitweglenkung (dynamic routing), die sich an die jeweilige im Netz vorliegende Verkehrslast so anpaßt, daß der Netzdurchsatz optimiert wird. Dabei müssen insbesondere auch Schieflastsituationen durch die Leitweglenkung entschärft werden.

So wie bei der konventionellen Leitweglenkung in hierarchischen Netzen wird auch bei einer dynamischen Leitweglenkung erst versucht, Verbindungen über einen oder mehrere Planwege, die zumeist Direktwege sind, aufzubauen. Ist dies nicht möglich, weil z.B. alle Verbindungsleitungsbündel des Direktweges vollständig belegt sind, wird der Überlaufverkehr Alternativwegen zugewiesen.

In der Auswahl der Alternativwege liegt der prinzipielle Unterschied zwischen dynamischer und konventioneller Leitweglenkung. Bei der konventionellen Leitweglenkung werden administrativ festgelegte Alternativwege in starrer Reihenfolge nach einer unbelegten Leitung bzw. einem unbelegten Kanal abgesucht ("fixed alternate routing"). Dadurch kann die Leitweglenkung nur sehr ungenügend auf nicht geplante, außergewöhnliche Lastsituationen reagieren.

Bei der dynamischen Leitweglenkung wird entstehender Überlaufverkehr einem oder mehreren aktiven Alternativwegen zugewiesen. Dieser aktive Alternativweg bzw. diese aktiven Alternativwege sind nicht fest, sondern werden entsprechend dem jeweiligen Verfahren zur dynamischen Leitweglenkung ausgewählt oder sogar bei jedem Call neu bestimmt. Die Vorteile der dynamischen Leitweglenkung liegen in Robustheit und Flexibilität gegenüber Schieflastsituationen im Netz, die z.B. durch zeitlich schwankende Lasten (räumlich begrenztes starkes Verkehrsaufkommen z.B. bei Katastrophen) und Netzdegradierung (Verbindungsleitungsbündelausfälle, Ausfälle von Vermittlungseinheiten) entstehen können. Außerdem können Unsicherheiten bei der Netzplanung besser kompensiert werden.

Aus der europäischen Patentschrift EP - B1 0 229 494 ist ein dezentrales Verfahren zur dynamischen Leitweglenkung bekannt, das einem Alternativweg solange Überlaufverkehr zuweist, bis dieser nicht mehr verfügbar ist, d.h. bis entweder der Erst-Link des Alternativwegs belegt ist, oder der Ursprungsknoten eine Auslösungsmeldung wegen Blockierung von einem Transitknoten erhält. In diesem Fall wird der bisherige Alternativweg zyklisch oder (pseudo-) zufällig durch einen anderen Alternativweg ersetzt. In einer anderen Ausprägung des Verfahrens wird der Überlaufverkehr auf eine Gruppe von mehreren Alternativwegen verteilt und ein Alternativweg im Falle eines Nichtverfügbarwerdens durch einen anderen Alternativweg ersetzt.

Das genannte Verfahren hat den Nachteil, daß auch hochbelastete Alternativwege immer wieder Überlaufverkehr erhalten, selbst wenn noch niedrig belastete Alternativwege zur Verfügung stehen würden und der entstehende Überlaufverkehr nicht allen wenig belasteten Wegen gleichmäßig angeboten wird.

Der Erfindung liegt die Aufgabe zugrunde, den Überlaufverkehr gleichmäßig auf möglichst niedrigbelastete Alternativwege zu verteilen.

Diese Aufgabe wird durch die Merkmale des Anspruchs 1 bzw. des Anspruchs 9 gelöst.

Durch das Nichtersetzen eines wegen Nichtverfügbarkeit aus dem Wegefächer herausgenommenen Alternativweges wird verhindert, daß hochbelastete Alternativwege zu früh nach ihrem Ausscheiden bereits wieder für den Überlaufverkehr angeboten werden und damit wieder Verkehr erhalten, obwohl noch niedrig belastete Alternativwege zur Verfügung stehen würden.

Des weiteren ist das erfindungsgemäße Verfahren weniger zeitaufwendig, da nach einem Feststellen der Nichtverfügbarkeit eines Alternativweges nicht jedes Mal ein Ersatz-Alternativweg bestimmt werden muß.

In einer Ausgestaltung der Erfindung nach Anspruch 3 besteht der Wegefächer der aktiven Alternativwege nach jeder (Re-) Initialisierung aus allen für die Ursprungs-Ziel-Beziehung möglichen Alternativwegen. Die (Re-)Initialisierung ist dadurch sehr wenig aufwendig.

In einer weiteren Ausgestaltung der Erfindung nach Anspruch 4 besteht der Wegefächer der aktiven Alternativwege nach jeder (Re-)Initialisierung aus einer echten Untermenge der für die Ursprungs-Ziel-Beziehung möglichen Alternativwege. Alternativwege, von denen a priori bekannt ist, daß sie momentan oder ständig wenig freie Kapazität besitzen, können damit bereits bei der Initialisierung des Verfahrens aus dem Wegefächer ausgeschlossen werden.

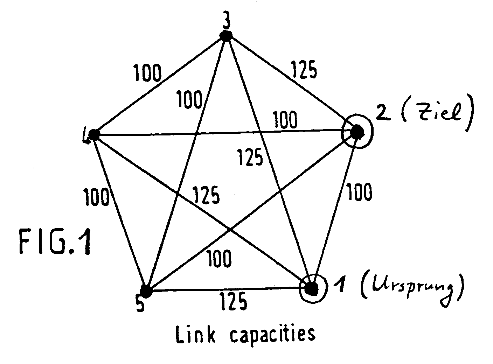

Im folgenden wird ein Ausführungsbeispiel des erfindungsgemäßen Verfahrens anhand FIG 1 näher erläutert.

FIG 1 zeigt ein Diagramm eines kleinen vollvermaschten Netzwerks mit fünf Netz-Vermittlungsknoten und den entsprechenden Kapazitäten der Wegabschnitte(Links) zwischen den Netzknoten, wobei ein Link mindestens ein Verbindungsleitungsbündel umfaßt.

Es werde nun angenommen, daß der Vermittlungsknoten 1 einen Call für Vermittlungsknoten 2 hat, aber die direkte Route zwischen den beiden Vermittlungsknoten nicht verfügbar ist.

Weiter werde angenommen, daß der initiale Wegefächer, d.h. der Fächer der aktiven Alternativwege nach seiner erstmaligen Initialisierung oder nach einer Reinitialisierung, aus allen für die Ursprungs-Ziel-Beziehung möglichen Zweilink-Alternativwegen besteht. Unter dieser Voraussetzung umfaßt der Wegefächer der Alternativwege für die Ursprungs-Ziel-Beziehung zwischen Vermittlungsknoten 1 und Vermittlungsknoten 2 drei Alternativwege, nämlich die Zweilink-Alternativwege über die Vermittlungsknoten 3, 4 und 5.

Es werde weiterhin davon ausgegangen, daß der überlaufende Verkehr vom Routing-System zyklisch auf diese aktiven Alternativwege gleichmäßig verteilt wird und zwar in der Reihenfolge Transitknoten 3, 4 und 5.

Unter den genannten Voraussetzungen überprüft das Routing-System am Vermittlungsknoten 1 zunächst, ob der aktive Alternativweg über Transitknoten 3 verfügbar ist, d.h. ob er belegbare freie Leitungen bzw. Kanäle aufweist (im folgenden wird nur von "Kanälen" gesprochen).

Um dies überprüfen zu können, speichert das Routing-System in Vermittlungsknoten 1 die Kapazität des Links zwischen Vermittlungsknoten 1 und 3, nämlich 125 Kanäle und den für diesen Link zugehörigen Trunk-Reservation-Parameter, der hier beispielsweise 10 sei. Das Routing-System speichert darüber hinaus die Anzahl der momentan benutzten Kanäle. Der Link zwischen Vermittlungsknoten 1 und 3 ist aus der Sicht des Routing-System dann für Überlaufverkehr verfügbar, wenn die Summe der benutzten Kanäle und des Trunk-Reservation-Parameters kleiner als 125 ist (Die Trunkreservierung garantiert die Stabilität eines Routing-Verfahrens im Hochlastbereich).

Ist der erste Link verfügbar, so baut der Vermittlungsknoten 1 die Verbindung zunächst bis zum Vermittlungsknoten 3 auf. Das Routing-System des Vermittlungsknotens 3 prüft dann vor der Weiterführung des Verbindungsaufbaus zum Ziel-Vermittlungsknoten 2 die Verfügbarkeit des zweiten Links, indem es überprüft, ob die Summe von belegte Kanäle plus Trunk-Reservation-Parameter kleiner als die Kapazität des zweiten Links ist (Das Routing-System des Vermittlungsknotens 3 kennt hierzu die Kapazität des Links zwischen Vermittlungsknoten 3 und 2, nämlich 125 Kanäle, sowie den Trunk-Reservation Parameter dieses Links, nämlich 10 Kanäle und die Anzahl der momentan belegten Kanäle dieses Links).

Falls auch der zweite Link des genannten aktiven Alternativweges verfügbar ist, wird die Verbindung vom Transitknoten 3 zum Zielknoten 2 aufgebaut.

Falls der Transitknotgen 3 feststellt, daß der Link zum Zielknoten 2 nicht verfügbar ist, lost Transitknoten 3 den Verbindungsabschnitt zum Ursprungsknoten 1 mit einer speziell gekennzeichneten Rückwärtsmeldung (crankback-Meldung) aus. Das Routing-System des Ursprungsknotens 1 entfernt daraufhin den Alternativweg über Transitknoten 3 aus dem Wegefächer für Zielknoten 2.

Im vorhergenannten Fall der erfolgreichen Vermittlung des Calls über Transitknoten 3 wird beim nächsten Call für den Vermittlungsknoten 2 bei Nichtverfügbarkeit der direkten Route nochmals versucht, den Call über den Transitknoten 3 zu lenken. Erst bei einem weiteren Call wird dann zyklisch gewechselt, d.h. der Call wird über den nächsten aktiven Alternativweg gelenkt, d.h. den aktiven Alternativweg über Transitknoten 4. Dadurch können kurzzeitige Autokorrelationen im Verkehrsangebot auf dem zweiten Link genutzt werden, die die Wahrscheinlichkeit erhöhen, daß unmittelbar nach einem erfolgreichen Verbindungsaufbau eine weitere Verbindung auf dem gleichen Weg aufgebaut werden kann.

Bei dem Ausführungsbeispiel wird der vom Direktweg überlaufende Verkehr also zyklisch umlaufend den aktiven Alternativwegen zugewiesen. Dabei erhält jeder der aktiven Alternativwege zwei aufeinander folgende, vom Direktweg überlaufende Calls zugewiesen.

Sobald das-Routing-System bei der Durchführung des Routing-Verfahrens feststellt, daß ein aktiver Alternativweg des Wegefächers nicht mehr verfügbar ist, wird dieser aus dem Wegefächer entfernt, jedoch nicht durch einen anderen Alternativweg ersetzt (unter dem Entfernen des Alternativwegs aus dem Wegefächer kann auch verstanden werden, daß der betroffene Alternativweg durch ein Kennzeichen als nicht verfügbar markiert wird). Durch das Nichtersetzen des entfernten Alternativweges im Wegefächer wird vermieden, daß ein Alternativweg mit unter Umständen wenig freien Leitungen durch Ersetzen eines anderen nicht mehr verfügbar gewordenen Alternativwegs wieder in die Wegesequenz aufgenommen wird und somit Verkehr auf dem neu aufgenommenen Alternativweg verloren geht.

Stellt das Routing-System fest, daß es einen Call einem Alternativweg mit einem besetzten ersten Wegabschnitt angeboten (zugewiesen) hat, wird der aktive Alternativweg gewechselt und der Call wird dem zyklisch nächsten aktiven Alternativweg angeboten. Ist auch hier der erste Wegabschnitt besetzt, wird der Alternativweg ein weiteres Mal getauscht. Insgesamt wird für einen Call maximal eine vorgegebene Anzahl von aktiven Alternativwegen auf verfügbare Kanäle im ersten Wegabschnitt geprüft, bevor der Call zu Verlust geht. Ein Call, der bei verfügbarem ersten Wegeabschnitt auf einen nicht verfügbaren zweiten Wegeabschnitt trifft, geht bei dem Ausführungsbeispiel sofort zu Verlust (kein "Rerouting"). Die Erfindung kann jedoch auch mit "Rerouting" realisiert werden.

Alternativwege mit wenig freien Kanälen werden durchschnittlich schneller nicht verfügbar als Alternativwege mit viel freien Kanälen. Letztere bleiben also durchschnittlich länger im Wegefächer der aktiven Alternativwege und erhalten somit auch mehr Überlaufverkehr zugewiesen.

Da der Überlaufverkehr auf alle im Wegefächer verbliebenen aktiven Alternativwege verteilt wird, bleiben die Alternativwege länger verfügbar als bei einem Verfahren, das mit einer festen Anzahl von aktiven Alternativwegen arbeitet.

Erst wenn überhaupt kein aktiver Alternativweg mehr existiert oder eine vorgegebene Anzahl von aktiven Alternativwegen im Wegefächer unterschritten wird, reinitialisiert das Routing-System den genannten Wegefächer.

Durch das genannte Entfernen der nicht mehr verfügbaren aktiven Alternativwege aus dem Wegefächer werden die "schlechten" Alternativwege ausgesiebt. Dadurch gehen beim Verteilen des aufkommenden Überlaufverkehrs auf alle im Wegefächer verbliebenen Alternativwege insbesondere unter Schieflast-Situationen im Netz nur sehr wenige Calls verloren.

In der Praxis verändert sich die Lastsituation im Netz ständig, -so daß ein Routing-System mit einem Wegefächer fester Größe nur selten eine optimale Verteilung des Überlaufverkehrs besitzen wird. Dagegen stellt das erfindungsgemäße Routing-System die Große des Wegefächers schnell auf einen optimalen Wert ein und hält diesen relativ lange Zeit.

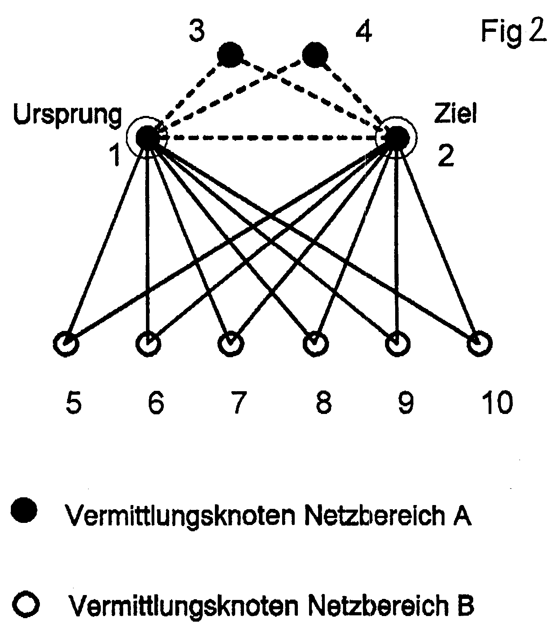

Diese Wirkungsweise wird im folgenden anhand von FIG 2 näher erläutert.

FIG 2 zeigt einen Ausschnitt aus einem vollvermaschten Kommunikationsnetz mit zehn Vermittlungsknoten, wobei in dem Ausschnitt der Ein-Link-Direktweg für Verkehr vom Ursprungsknoten 1 zum Zielknoten 2 dargestellt ist und alle Zwei-Link-Alternativwege dieser Ursprungs-Ziel-Beziehung über die Transitknoten 3 bis 10.

Für das Beispiel in FIG 2 wird ebenfalls wie bei FIG 1 davon ausgegangen, daß als Alternativwege nur Zwei-Link-Wege in Frage kommen.

Im in FIG 2 dargestellten Beispiel sei angenommen, daß zwischen den Vermittlungsknoten 1 bis 4 (Netzbereich A) für einige Zeit ein außerplanmäßiges, stark erhöhtes Verkehrsangebot herrsche, während zwischen den Vermittlungsknoten 5 bis 10 (Netzbereich B) und zwischen den Vermittlungsknoten von Bereich A und Bereich B ein normales, planmäßiges Verkehrsangebot vorliegt. Durch das starke Verkehrsangebot innerhalb von Bereich A werden die gestrichelt eingezeichneten Links (aufgrund der Trunk-Reservierung) fast ausschließlich mit Direktwegverkehr belegt. Dadurch weisen die Alternativwege über Transitknoten 3 und 4 eine hohe Blockierungswahrscheinlichkeit für den Überlaufverkehr (z.B. 99 %) auf, während die sechs Alternativwege, die über die Transitknoten 5 bis 10 führen (in FIG 2 durchgezogen eingezeichnet) insgesamt eine sehr geringe Blockierungswahrscheinlichkeit (z.B. 0,01 %) haben.

Es wird nun wieder davon ausgegangen, daß der Wegefächer für den Verkehr von Vermittlungsknoten 1 zum Vermittlungsknoten 2 des dargestellten Beispiels mit dem vollen Wegefächer initialisiert wird, d.h. mit den in FIG 2 dargestellten acht Alternativwegen. Diesen Alternativwegen wird der vom Direktweg (1-2) überlaufende Verkehr bzw. die überlaufenden Calls angeboten. Da die Blockierungswahrscheinlichkeit auf den Alternativwegen über Transitknoten 3 und 4 wesentlich hoher ist, als auf den Alternativwegen über Transitknoten 5 bis 10, werden die beiden hochbelasteten Alternativwege bald aus dem Wegefächer entfernt. (Bei den oben angenommenen Blockierungswahrscheinlichkeiten wird ein hochbelasteter Alternativweg in 99 von 100 Fällen nach dem ersten zugeteilten Call entfernt, während dies bei einem der sechs niedrig belasteten Alternativwege nur in einem von 10 000 Fällen passiert).

Nachdem sich der Wegefächer gemäß der genannten Wirkungsweise auf die niedrig belasteten Alternativwege reduziert hat, wird der aufkommende Überlaufverkehr nur noch auf die sechs niedrig belasteten Alternativwege nach einem bestimmten Auswahlschema (zufallsgesteuert oder pseudozufallsgesteuert oder zyklisch umlaufend) gleichmäßig verteilt. Der Anstieg der Blockierungswahrscheinlichkeit durch den zugeteilten Überlaufverkehr auf den Alternativwegen wird also minimiert.

Der Wegefächer reduziert sich also sehr schnell auf die optimale Große und verkleinert sich dann nur noch langsam.

Verändert sich die im Beispiel betrachtete Netzlast dahingehend, daß ein bisher niedrig belasteter Alternativweg hoch belastet wird, wird dieser bald aus dem Wegefächer entfernt. Wird umgekehrt ein bisher hochbelasteter Alternativweg zu einem niedrig belasteten Alternativweg, stellt sich nach der nächsten Reinitialisierung der Wegefächer schnell wieder auf die neue optimale Größe ein.

Im Gegensatz dazu kann sich bei Verfahren, die mit Wegefächern fester Größe arbeiten, die Größe der Fächer nicht an die sich verändernden Verkehrsschieflasten im Netz anpassen. Dadurch enthält ein Wegefächer fester Größe oft entweder hochbelastete Alternativwege oder nicht alle niedrig belasteten Alternativwege. Im ersten Fall geht Verkehr auf den hochbelasteten Alternativwegen verloren. Im zweiten Fall wird der aufkommende Überlaufverkehr ungleichmäßig auf die niedrig belasteten Wege verteilt, so daß wiederum mehr Verkehr als beim erfindungsgemäßen Verfahren verlorengeht.

Wird der Wegefächer einer Ursprungs-Ziel-Beziehung nur dann reinitialisiert, wenn die Zahl der in ihm enthaltenen Alternativwege eine vorgegebene Anzahl unterschreitet, so kann die Zeitkonstante des durch das Nichtersetzen eines aus dem Wegefächer entfernten Alternativweges erzielten Siebvorgangs bei geringem Überlaufverkehr recht lang werden. Durch eine zusätzlich rein zeitlich bedingte Reinitialisierung (Ablauf einer bestimmten Zeitspanne, z.B. 10-15 Min., seit der letzten Realisierung oder periodische Reinitialisierung, angestoßen durch ein netzzentralen Verkehrsmanagement-System unter Berücksichtigung der aktuellen Lastsituation im Netz) kann die Möglichkeit für eine derartig lange Zeitkonstante vermieden und somit erreicht werden, daß Alternativwege, die aus dem Wegefächer gefallen sind, aber inzwischen durch Veränderung der Netzlast wieder freie Kapazität besitzen, früher wieder in den Wegefächer aufgenommen werden.

Des weiteren ist es auch möglich, daß das genannte netzzentrale Verkehrsmanagement-System nach dem Erkennen einer Schieflastsituation im Netz eine Reinitialisierung der Wegefächer aperiodisch anstößt.

Schließlich kann auch der Netzbetreiber eine aperiodische Reinitialisierung anstoßen.

## Patentansprüche

1. Verfahren zur dynamischen Verkehrslenkung in einem Kommunikationsnetz, demgemäß
a) Calls zwischen einem Ursprungs-Vermittlungsknoten und einem Ziel-Vermittlungsknoten zunächst einem oder mehreren bevorzugten Wegen (Planwegen) angeboten werden,
b) für den Fall, daß keiner der Planwege verfügbar ist, Calls Alternativwegen, die in einem Wegefächer enthalten sind, nach einem bestimmten Auswahlschema angeboten werden,
c) ein bisher im Wegefächer enthaltener Alternativweg aus dem Wegefächer entfernt wird, sobald festgestellt wird, daß er nicht mehr verfügbar ist,
d) der aus dem Wegefächer entfernte Alternativweg nicht ersetzt wird,
e) der Wegefächer periodisch, d.h. nach bestimmten Zeitabständen, und/oder aperiodisch, d.h. nach Eintreten wenigstens eines Ereignisses oder aufgrund eines Kommandos von einem netzzentralen Verkehrsmanagement-System oder dem Netzbetreiber reinitialisiert wird.

2. Verfahren nach Anspruch 1,
**dadurch gekennzeichnet,**
daß als Ereignis nach dessen Eintreten reinitialisiert wird das Unterschreiten der in dem Wegefächer enthaltenen Zahl von Alternativwegen unter eine bestimmte Anzahl oder das Ablaufen einer bestimmten Zeitspanne seit der letzten Reinitialisierung in Frage kommt.

3. Verfahren nach Anspruch 1 oder 2,
**dadurch gekennzeichnet,**
daß dem Wegefächer bei einer Initialisierung bzw. Reinitialisierung alle möglichen Alternativwege zugeordnet werden.

4. Verfahren nach Anspruch 1 oder 2,
**dadurch gekennzeichnet,**
daß dem Wegefächer bei einer Initialisierung bzw. Reinitialisierung eine Untermenge der möglichen Alternativwege zugeordnet wird, die nach dem Kriterium der Verkehrsbelastung oder der freien Kapazität der Alternativwege von dem Ursprungs-Vermittlungsknoten oder einem netzzentralen Verkehrsmanagement-System ermittelt wird.

5. Verfahren nach einem der Ansprüche 1 bis 4,
**dadurch gekennzeichnet,**
daß ein Call nur einem einzigen Alternativweg angeboten wird, bevor er wegen dessen Nichtverfügbarkeit ausgelöst wird.

6. Verfahren nach einem der Ansprüche 1 bis 4,
**dadurch gekennzeichnet,**
daß ein Call mehreren Alternativwegen angeboten wird, bevor er wegen deren Nichtverfügbarkeit ausgelöst wird.

7. Verfahren nach einem der Ansprüche 1 bis 6,
**dadurch gekennzeichnet,**
daß das genannte bestimmte Auswahlschema darin besteht, daß die Alternativwege aus dem Wegefächer zufallsgesteuert oder pseudozufallsgesteuert oder zyklisch umlaufend ausgewählt werden.

8. Verfahren nach einem der Ansprüche 1 bis 7,
**dadurch gekennzeichnet,**
daß jedem aus dem Wegefächer für den Überlaufverkehr ausgewählten Alternativweg eine vorgegebene Anzahl von überlaufenden Calls angeboten wird, bevor zu dem nach dem Auswahlschema nächsten Alternativweg übergegangen wird.

9. Routing-System zur dynamischen Verkehrslenkung in einem Vermittlungsknotenprozessor eines Kommunikationsnetzes, das derart ausgestaltet ist, daß es
a) Calls zwischen einem Ursprungs-Vermittlungsknoten und einem Ziel-Vermittlungsknoten zunächst einem oder mehreren bevorzugten Wegen(Planwegen) anbietet,
b) für den Fall, daß keiner der Planwege verfügbar ist, Calls Alternativwegen, die in einem Wegefächer enthalten sind, nach einem bestimmten Auswahlschema anbietet,
c) einen bisher im Wegefächer enthaltenen Alternativweg aus dem genannten Wegefächer entfernt, sobald es feststellt, daß er nicht mehr verfügbar ist,
d) den aus dem Wegefächer entfernten Alternativweg nicht ersetzt,
e) den Wegefächer periodisch, d.h. nach bestimmten Zeitabständen, und/oder aperiodisch, d.h. nach Eintreten wenigstens eines Ereignisses oder aufgrund eines Kommandos von einem netzzentralen Verkehrsmanagement-System oder dem Netzbetreiber reinitialisiert.

10. Routing-System nach Anspruch 9,
**dadurch gekennzeichnet,**
daß als Ereignis nach dessen Eintreten das Routing-System den Wegefächer reinitialisiert das Unterschreiten der in dem Wegefächer enthaltenen Zahl von Alternativwegen unter eine bestimmte Anzahl oder das Ablaufen einer bestimmten Zeitspanne seit der letzten Reinitialisierung in Frage kommt.

11. Routing-System nach Anspruch 9 oder 10,
**dadurch gekennzeichnet,**
daß es dem Wegefächer bei einer Initialisierung bzw. Reinitialisierung alle möglichen Alternativwege zuordnet.

12. Routing-System nach Anspruch 9 oder 10,
**dadurch gekennzeichnet,**
daß es dem Wegefächer bei einer Initialisierung bzw Reinitialisierung eine Untermenge-der möglichen Alternativwege zuordnet, die nach dem Kriterium der Verkehrsbelastung oder der freien Kapazität der Alternativwege von dem Routing-System selbst oder einem netzzentralen Verkehrsmanagement-System ermittelt wird.

13. Routing-System nach einem der Ansprüche 9 bis 12,
**dadurch gekennzeichnet,**
daß es einen Call einem einzigen Alternativweg anbietet, bevor er bei dessen Nichtverfügbarkeit ausgelost wird.

14. Routing-System nach einem der Ansprüche 9 bis 12,
**dadurch gekennzeichnet,**
daß es einen Call mehreren Alternativwegen anbietet, bevor er bei deren Nichtverfügbarkeit ausgelost wird.

15. Routing-System nach einem der Ansprüche 9 bis 14,
**dadurch gekennzeichnet,**
das genannte bestimmte Auswahlschema darin besteht, daß die Alternativwege aus dem Wegefächer zufallsgesteuert oder pseudozufallsgesteuert oder zyklisch umlaufend ausgewählt werden.

16. Routing-System nach einem der Ansprüche 9 bis 15,
**dadurch gekennzeichnet,**
daß es jedem aus dem Wegefächer für den Überlaufverkehr ausgewählten Alternativweg eine vorgegebene Anzahl von überlaufenden Calls anbietet, bevor es den nach dem Auswahlschema nächsten Alternativweg anbietet.
